# EUROPEAN PATENT APPLICATION

(11) **EP 1 076 443 A1**
(43) Date of publication of application: **14.02.2001**
(21) Application number: 99440225.3
(22) Date of filing: 13.08.1999
(51) Int. Cl.: H04M 1/72, H04B 3/54

(54) **Method of establishing a call between a cordless terminal and another external terminal, with an analog network and the power line**

(71) Applicant: ALCATEL, 75008 Paris (FR)
(72) Inventor: Loeuillet, Patrick, 67200 Strassbourg (FR)
(74) Representative: Menzietti, Domenico, Dipl.-Ing

(57) **Abstract**

The invention relates to a method of establishing a call between a cordless subscriber terminal (6-8) and another subscriber terminal (6-11), with each of the two subscriber terminals (6-11) being addressed via an individual identification signal, and both being addressed from outside via the same analog network termination (3). The method includes the steps of:
- generating first control signals at the cordless subscriber terminal (6-8);
- activating, in response to these first control signals received by the base station (5), means contained in the base station (5) for generating second control signals to be transferred over an in-house power line (13);
- transmitting the second control signals over the in-house power line (13);
- detecting the second control signals at the called subscriber terminal (6-11); and
- accepting the call at the called subscriber terminal (6-11).

## Description

This invention relates to a method of establishing a call between a cordless subscriber terminal and another subscriber terminal, as well as to a cordless telecommunications system, a cordless subscriber terminal, and a base station for carrying out this method.

The invention starts from an internal development which is based on a cordless telecommunications system consisting of a base station and a number of cordless subscriber terminals. The base station is connected via a network termination to a single exchange line. Nevertheless, an external subscriber can selectively call one of the cordless subscriber terminals. To make this possible, each subscriber terminal is identified by an identification signal. This identification signal generally forms part of the calling line identification, which is transmitted to the called subscriber terminal after the first signal (ringing pulse alerting signal). The base station, which recognizes the cordless subscriber terminals, is provided with means for detecting and generating such identification signals. These means generally include a modem which can demodulate the identification signal and pass it on to a processor. After a logic operation, such as a comparison between the demodulated identification signal and the preset individual identification signals of the cordless subscriber terminals, which are stored in a memory, it is determined to which of the cordless subscriber terminals the incoming call is directed. Depending on the result of this comparison, the base station will send a signal which will activate an alarm, e.g., an audible alarm, at the called cordless subscriber terminal only.

The assignment of individual identification signals to the cordless subscriber terminals offers an essential advantage, particularly for analog exchange lines. Today such a telecommunications system often forms part of a telecommunications network. Other telecommunications terminals may be connected in parallel with the base station and coupled to the same network termination. The telecommunications network may be composed, for example, of the telecommunications system, comprising the base station and the cordless subscriber terminals, a further telephone, a fax machine, and a telephone answering set. If such telecommunications terminals, which are connected in parallel to the same network termination, and the cordless subscriber terminal are identified by an identification signal, an external subscriber can reach either a given cordless subscriber terminal or one of the other subscriber terminals.

Still, the use of such a telecommunications network is greatly restricted by the connection to a single analog exchange line. For example, a subscriber of the telecommunications network whose number has been dialed by an external subscriber by mistake cannot transfer the call to another telecommunications terminal of the telecommunications network. The external subscriber has no choice but to terminate the first call and dial anew. Nor is it possible with such a telecommunications network to make a call to an external subscriber if a subscriber with a cordless subscriber terminal is engaged in retrieving data from one of the telecommunications terminals of the telecommunications network or in changing such data. If, for example, this subscriber wants to check by means of his cordless subscriber terminal whether a fax has arrived at the fax machine of the telecommunications network, the telephone line will unnecessarily remain busy for the external subscriber.

It is the object of the invention to render connections between a cordless subscriber terminal and a further subscriber terminal more flexible, with each of the two subscriber terminals being addressed via an individual identification signal and from outside via the same network termination.

According to the invention, this object is attained by a method according to the teaching of claim 1 and by a cordless telecommunications system, a cordless subscriber terminal, and a base station according to the teachings of claims 4, 5, and 6, respectively.

The basic idea of the invention lies in the utilization of the fact that cordless subscriber terminals of a telecommunications system which are identified by individual identification signals require a base station which is equipped with a modem and is therefore supplied with current. Since that is also the case for all telecommunications terminals of the telecommunications network, such telecommunications terminals and the base station of the telecommunications system are connected to an in-house power line. The activation by a cordless subscriber terminal of control signals generated in the base station, which are transferred over the power line, makes it possible to establish a call to a telecommunications terminal of the telecommunications network without using the telephone line. If a single exchange line is present, only such a call establishment makes it possible to transfer a call between an external subscriber and a cordless subscriber terminal to a telecommunications terminal of the telecommunications network without having to terminate the call with the external subscriber.

These control signals, which are transferred over the in-house power line and may contain the identification signal of the telecommunications terminal to be addressed, can also be used to retrieve operating data from the called telecommunications terminal and, if necessary, to change this data. This is particularly advantageous in a telecommunications network in which the individual telecommunications terminals are located in several separate rooms.

If such a cordless telecommunications system and such telecommunications terminals are used to implement a telecommunications network, it is only necessary to provide new activatable or deactivatable instruction sets for the telecommunications terminals. The instruction sets are stored in a memory and are made available to the modems of the respective telecommunications terminals to permit the generation of control signals to be transferred over the in-house power line. If these instruction sets are activated by a cordless subscriber terminal, the modem of the base station which is in radio communication with this cordless subscriber terminal will generate control signals and transmit them over the in-house power line. These instruction sets can be stored in a memory of the base station and be made available to the respective cordless subscriber terminals by radio. It is also possible to store the instruction sets in a nonvolatile memory of a telecommunications terminal implemented as a personal computer (PC) before making it available to the base station. This illustrates the small amount of complexity involved in upgrading a telecommunications network in such a way that it offers the new services according to the invention, for example by reading the instruction set from a storage medium via the disk drive of the PC and storing it in the nonvolatile memory of the latter.

Further advantageous features of the invention are defined in the dependent claims and will become apparent from the following description and the drawings.

One embodiment of the invention will now be explained in more detail with reference to the accompanying drawings, in which:
- Fig. 1: is a schematic of a telecommunications network including a cordless telecommunications system;
- Fig. 2: is a schematic of a first variant of the telecommunications network of Fig. 1; and
- Fig. 3: is a schematic of a second variant of the telecommunications network of Fig. 1.

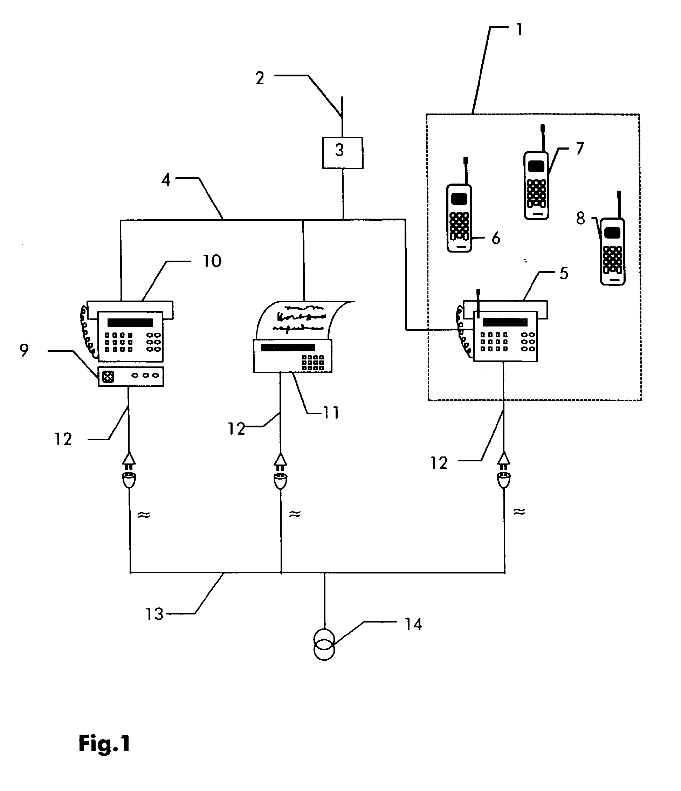

The telecommunications network shown schematically in Fig. 1 consists of a cordless telecommunications system 1 and several telecommunications terminals 9 to 11. An analog network termination 3 is connected via an exchange line 2 to the public switched telephone network. The cordless telephone system consists of a base station 5 and several cordless subscriber terminals 6 to 8, which are in radio communication with the base station 5. All telecommunications terminals 9 to 11 and the base station 5 are connected to the network termination 3 by a telephone line 4. They are supplied with current via respective power cables 12. The respective power cables 12 are connected to an in-house power line 13 which is supplied with current via an electric power meter 14.

The individual telecommunications terminals 9 to 11 are a telephone answering set 9, a telephone 10 connected thereto, and a fax machine 11. This is one embodiment of the invention; in other embodiments, other telecommunications terminals, such as a personal computer (PC) or a printer, may be provided. The number of telecommunications terminals connected in parallel to the network termination 3 is not limited.

An individual identification signal is assigned to each of the telecommunications terminals 9 to 11 and to each of the cordless terminals 6 to 8. This enables a subscriber external to the network termination 3 to selectively address one of the cordless subscriber terminals 6 to 8 or one of the telecommunications terminals 9 to 11 of the telecommunications network. If a single analog exchange line 2 is present, this is possible if the service provider (e.g., Deutsche Telekom) assigns not only one telephone number per analog exchange line but, possibly for a certain extra charge, additional, virtual telephone numbers. It then rests with the owner of the telecommunications network to determine which telephone number to assign to which telecommunications terminal.

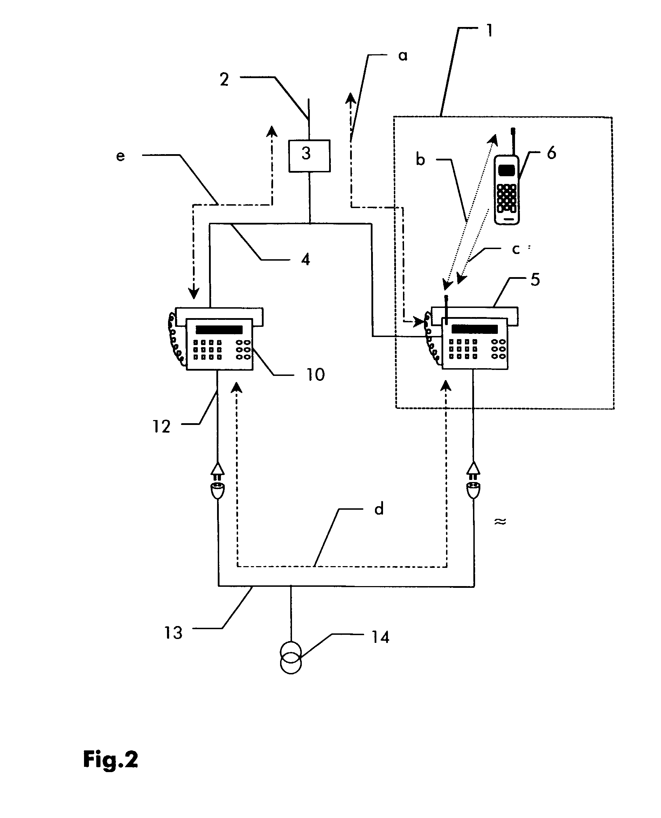

Fig. 2 is a schematic of a first variant of the telecommunications network, comprising the cordless telecommunications system 1 and a telephone 10 connected in parallel with the cordless telecommunications system 1 and coupled to the network termination 3. After an external subscriber has called the cordless subscriber terminal 6, and the called subscriber terminal has sent a call accepted signal, a connection is established between the external subscriber and the cordless subscriber terminal 6, the call being switched through on the telephone line 4 to the base station 5 "a", from where it is transmitted to the cordless subscriber terminal 6 by radio, "b". If it turns out that the call has to be transferred to the telephone 10, the subscriber at the cordless subscriber terminal 6, for example by entering a combination of digits, will generate first control signals "c", which are transmitted to the base station 5 by radio. Reception of these first control signals "c" by the base station 5 activates means contained in the base station for generating second control signals "d", which are transferred over the in-house power line 13. Together with the generation of the second control signals at the latest, the individual identification signal of the called subscriber terminal 10 is generated. These second control signals d spread through the power line 10 and thus reach all telecommunications terminals connected to the power line. The modem contained in the telephone 10 will process these second control signals d and pass them on to a processor in the telephone 10, which will determine after logic operations whether the individual identification signal of the telephone 10 is included in the second control signals "d". If so, the processor of the telephone 10 will transfer instructions which will activate a ringing signal, for example, and cause information, such as the name of the called subscriber, to be presented on a display of the telephone 10. After the subscriber at the telephone 10 has lifted the handset, the call from the external subscriber is automatically transferred to the telephone 10. A connection "e" then exists between the external subscriber and the subscriber at the telephone 10 over the telephone line 4. This transfer is effected without the external subscriber having to operate anything.

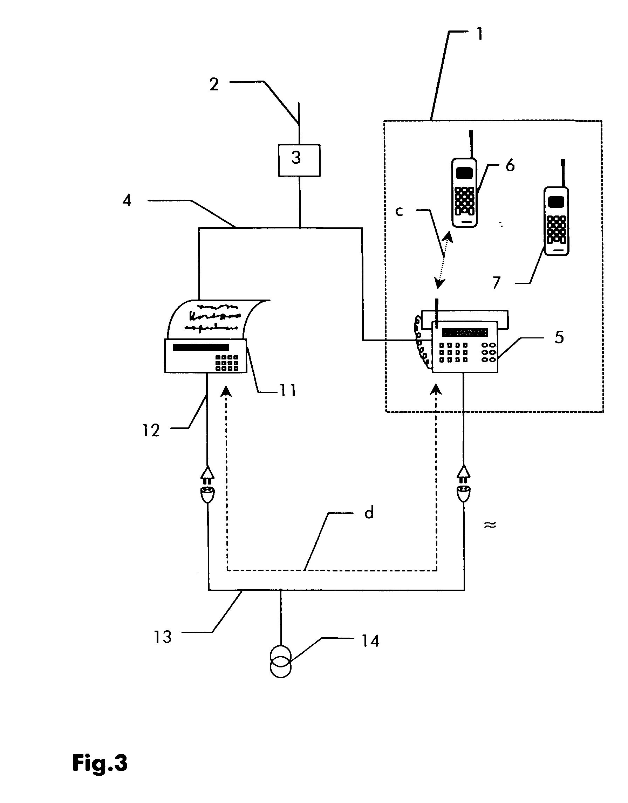

As shown in Fig. 3, the subscriber at the cordless subscriber terminal 6 can use the in-house power line to retrieve operating data from one of the telecommunications terminals of the telecommunications network, in this case the fax machine 11, or to change such operating data. To do this, the subscriber at the cordless subscriber terminal 6 will enter a corresponding combination of digits. This causes first control signals "c" to be sent to the base station 5, which activate the modem contained in the base station. The modem generates second control signals "d", which are transmitted over the in-house power line 13. The modem of the fax machine 11 receives these second control signals "d" and processes them before they are passed on to the processor of the fax machine 11. After the processor has determined that these second control signals "d" are assigned to the fax machine 11, a connection can be established between the cordless telecommunications terminal 6 and the fax machine 11 in order to retrieve and/or change operating data of the fax machine 11. During that time, the telephone line 4 will remain idle, so that an external subscriber can address either a second cordless terminal 7 or, for example, the fax machine itself over the telephone line 4. This enables the subscriber of the cordless telephone terminal 6 to determine, for example, whether a fax has arrived at the fax machine 11, without seizing the telephone line 4.

The second control signals "d" (Fig. 2 or Fig. 3), which are transferred over the in-house power line 13 and serve to establish a call between a cordless subscriber terminal 6 to 8 of the cordless telecommunications system 1 and a telecommunications terminal 9 to 11 of the telecommunications network, cannot leave the in-house power line 13 through the electric power meter 14. This ensures, on the one hand, that these second control signals d do not interfere with the supply of power and, on the other hand, that no third party can intercept them outside the in-house power line 13.

## Claims

1. A method of establishing a call between a cordless subscriber terminal (6-8) and another subscriber terminal (6-11), with each of the two subscriber terminals (6-11) being addressed via an individual identification signal, and both subscriber terminals (6-11) being addressed from outside via the same analog network termination (3), said method comprising the steps of:
• dialing the number of the other subscriber terminal (6-11) at the cordless subscriber terminal (6-8);
• generating first control signals at the cordless subscriber terminal (6-8);
• sending said first control signals to a base station (5) connected to the analog network termination (3);
• receiving the first control signals at the base station (5);
• activating, in response to said first control signals, means contained in the base station (5) for generating second control signals to be transferred over an in-house power line (13);
• transmitting the second control signals over the in-house power line (13);
• detecting the second control signals at the other subscriber terminal (6-11); and
• accepting the call at the other subscriber terminal (6-11).

2. A method of establishing a call as claimed in claim 1, characterized in that the individual identification signal of the other subscriber terminal (6-11) is generated together with the generation of the second control signals at the latest.

3. A method of establishing a call as claimed in claim 1, characterized in that it serves to transfer a call existing between the cordless subscriber terminal (6-8) and an external subscriber.

4. A cordless telecommunications system (1) comprising:
at least one cordless subscriber terminal (6-8) which is addressable via an individual identification signal and includes means
whereby it can generate first control signals; and a base station (5) comprising
an interface to a network termination (3), an interface to an in-house power line (13), a receiver for said first control signals, and additional means,
the additional means being activatable by the first control signals to generate second control signals to be transmitted over the in-house power line (13).

5. A cordless subscriber terminal (6-8) which
is addressable via an individual identification signal and includes means
whereby it can generate first control signals for establishing a call via a base station (5) comprising
an interface to a network termination (3), an interface to an in-house power line (13), a receiver for said first control signals, and additional means,
the additional means being activatable by the first control signals to generate second control signals to be transmitted over the in-house power line (13).

6. A base station (5) comprising:
a receiver for signals transmitted by a cordless subscriber terminal (6-8);
an interface to a network termination (3);
an interface to an in-house power line (13); and additional means,
the additional means being activatable by first control signals transmitted by a cordless telecommunications terminal (6-8) and received by the base station (5) to generate second control signals to be transmitted over the in-house power line (13).
